# FASCICULE DE BREVET EUROPEEN

(11) **EP 2 078 580 B1**
(45) Date de publication et mention de la délivrance du brevet: **09.10.2013**
(21) Numéro de dépôt: 09150262.5
(22) Date de dépôt: 09.01.2009
(51) Int. Cl.: B23K 9/173

(54) **Procédé de soudage MAG avec arc rotatif de faible énergie**
MAG-Schweißverfahren mit Rotationsbogen niedriger Energie
MAG welding method with low-power rotating arc

(30) Priorité: 11.01.2008 FR 0850172
(43) Date de publication de la demande: 15.07.2009
(73) Titulaire: L'Air Liquide Société Anonyme pour l'Etude et l'Exploitation des Procédés Georges Claude, 75007 Paris (FR)
(72) Inventeur: Boudet, Gilles, 78570 Andresy (FR); Herduin, Christophe, 95300 Ennery (FR); Saez, Michel, 60260 Lamorlaye (FR)
(74) Mandataire: Pittis, Olivier

(56) Documents cités:
- EP-A- 0 167 163
- DE-C1- 19 704 513
- US-A- 2 916 601
- US-A- 4 857 692

## Description

La présente invention concerne un procédé de soudage à l'arc de type MAG amélioré permettant d'obtenir des soudures de bonne qualité tout en maintenant une productivité élevée tel que revendiqué dans la revendication 1.

Dans le domaine de la fabrication industrielle, les entreprises sont de plus en plus en recherche de gains de productivité.

C'est le cas du procédé de soudage à l'arc électrique de type MAG (Metal Active Gas) qui met en oeuvre un fil d'apport fusible et un gaz de protection, qui fait l'objet d'améliorations constantes au fil du temps.

Ainsi, de nouveaux matériels et produits de soudage MAG sont continuellement proposés mais, bien souvent, ils ne connaissent pas un succès industriel car ils engendrent des coûts d'investissement trop importants ou nécessitent une remise en cause du processus de production industriel auquel ils sont appliqués, ce qui engendre, là aussi, des investissements ou des dépenses qui contrebalancent le gain qu'ils sont supposés apporter.

En effet, le gain apporté par ces produits de soudage est généralement défini uniquement en termes de vitesse de soudage.

Or, on sait qu'au delà d'une valeur limite, augmenter encore la vitesse de soudage engendre des risques de défauts dans les cordons de soudure ou de fragilité métallurgique des pièces soudées.

Ne s'intéresser qu'à la vitesse de soudage en soudage MAG n'est donc pas suffisant et il convient davantage de prendre en compte le temps d'arc allumé et le taux de dépôt qui sont des paramètres plus représentatifs de la productivité.

Les solutions existantes permettant d'obtenir des taux de dépôts élevés sont les applications de soudage MAG bi-fils ou de soudage à l'arc submergé. Toutefois, ces procédés nécessitent des investissements importants et ne sont donc pas totalement satisfaisants.

Il a aussi été proposé d'opérer un soudage MAG avec fil fourré. Toutefois, ce procédé présente l'inconvénient de nécessiter des travaux de parachèvement car il engendre des projections de métal fondu, ce qui nuit à la productivité du procédé.

Enfin, pour augmenter le taux de dépôt, il a aussi été proposé d'opérer un soudage avec arc rotatif avec des mélanges de gaz quaternaires constitués d'argon, d'hélium, de CO₂ et d'oxygène. Toutefois, ce procédé n'est appliqué qu'au soudage à plat de fortes épaisseurs, c'est-à-dire typiquement de plus de 6 mm, ou en soudage avec préparation en chanfrein et pour des intensités élevées, c'est-à-dire typiquement de l'ordre de 600 A. Il s'ensuit que les utilisations d'un arc rotatif dans de telles conditions sont rares et difficilement applicables au plan industriel, du fait des contraintes qui en résultent, notamment une intensité très élevée, une chaleur importance du bain de fusion...

Par ailleurs, le document DE-A-19704513 enseigne un procédé de soudage à l'arc rotatif selon le préambule de la revendication 1.

Le but de l'invention est dès lors de proposer un procédé de soudage MAG amélioré permettant d'obtenir un temps d'arc allumé plus important et un taux de dépôt plus élevé que les procédés de soudage MAG classiques, et ce, sans engendrer un surcoût ou un investissement trop important ou nécessiter une mise en oeuvre compliquée, qui soit utilisable tant en soudage à plat qu'en soudage circulaire,et sur différentes épaisseurs, notamment sur des épaisseurs peu importantes, c'est-à-dire typiquement inférieures à 5 mm.

La solution de l'invention est alors un procédé de soudage MAG à l'arc électrique mettant en oeuvre un fil d'apport fusible et un gaz de protection, dans lequel :
a) on assemble au moins deux pièces métalliques l'une avec l'autre de manière à définir un joint à souder entre lesdites pièces métalliques,
b) on opère à l'aide de l'arc électrique, une fusion du métal constitutif desdites pièces le long du joint à souder et simultanément une fusion progressive du fil d'apport et le dépôt, au niveau du joint, du métal fondu issu de la fusion du fil de manière à obtenir, après refroidissement, un cordon de soudage,
c) durant l'étape b), on opère une protection gazeuse du joint de soudure au moyen d'un gaz de protection,
caractérisé en ce qu'à l'étape a), lesdites pièces métalliques sont à bords soyés et définissent un joint à souder de forme incurvée et, à l'étape b), l'arc est un arc rotatif obtenu en mettant en oeuvre un courant d'intensité inférieure à 400A et de tension inférieure à 40 V.

Avantageusement, à l'étape c), le gaz de protection utilisé est un mélange gazeux ternaire constitué de 8 à 12 % d'hélium, de 2,5 à 3,5 % d'oxygène et d'argon pour le reste (% en volume).

En effet, selon la présente invention, il est important de choisir un gaz ternaire selon la composition susmentionnée car ladite composition influe sur le mode de transfert du métal et les plages de régimes d'arc.

Le transfert du métal dans l'arc correspond à la manière dont le fil de soudage fond sous l'effet de l'arc électrique en transférant les gouttes de métal pour former le cordon de soudage.

En soudage MAG classique, il existe trois principaux modes de transfert et un mode intermédiaire qui constituent les régimes d'arc, à savoir :
- par court circuits (faible tension et faible intensité) principalement utilisé sur fines épaisseurs et en soudage en position (maintien du bain de fusion métal liquide),
- par pulvérisation axiale (forte tension et forte intensité) pour les applications sur forte épaisseurs et en position à plat,
- globulaire (intermédiaire aux deux régimes précédent) que l'on évite d'utiliser compte tenu d'un résultat de soudage peu avantageux : nombreuses projections, arc erratique donnant un aspect de cordon irrégulier avec risques de défauts de soudage, et
- pulsé : régime d'arc assimilé à la pulvérisation axiale dont on contrôle la puissance (P=U.I) par la fréquence des pulsations. Il permet le soudage des tôles fines du fait d'un faible taux de dépôt.

Selon l'invention, utiliser un arc rotatif permet un transfert du métal dans l'arc en tournant à grande vitesse à l'extrémité du fil de soudage sous forme d'un crochet. Ce régime d'arc permet d'avoir une forme de pénétration large et arrondie sous l'effet d'une forte pression sur le bain de fusion. L'arc étant tournant, il permet de déposer des gouttes de métal sur les bords du joint soudé sans risque de défaut tel que la formation d'un caniveau.

De ce fait, ce régime d'arc favorise des joints soudés sur préparations particulières, tel que les bords soyés, et permet de déposer de grandes quantités de métal.

On améliore ainsi la productivité tant par le taux de dépôt que par l'amélioration de la qualité. Cette amélioration de la qualité (i.e. la réduction de rebus ou de retouches) permet d'augmenter le temps d'arc allumé et donc d'obtenir un accroissement de la production. L'obtention d'un arc rotatif à une intensité inférieure à 400A et inférieure à 40 V selon le procédé de l'invention est surprenante car, en soudage MAG, le régime d'arc mis en oeuvre est généralement de type pulvérisation axiale.

De plus, travailler en régime à arc rotatif est d'autant plus intéressant que cela permet de souder de faibles épaisseurs à une grande vitesse de soudage, donc en obtenant une basse énergie.

Ce régime à arc rotatif est obtenu notamment en utilisant spécifiquement le gaz de protection ternaire constitué de 8 à 12 % d'hélium, de 2,5 à 3,5 % d'oxygène et d'argon pour le reste (% en volume). La présence d'oxygène, qui est un gaz actif oxydant, favorise l'effet de mouillage et celle d'hélium complète cet effet de par son pouvoir calorifique.

Selon le cas, le procédé de soudage de l'invention peut comprendre, en outre, l'une ou plusieurs des caractéristiques additionnelles suivantes :
- à l'étape c), le mélange gazeux contient plus de 9% d'hélium, de préférence plus de 9,5% d'hélium, et/ou le mélange gazeux contient moins de 11% d'hélium, de préférence moins de 10,5% d'hélium.
- à l'étape c), le mélange gazeux contient plus de 2,7% d'oxygène, de préférence plus de 2,8% d'oxygène et/ou moins de 3,3% d'oxygène, de préférence moins de 3,2% d'oxygène.
- à l'étape c), le mélange gazeux contient entre 2,9% et 3,1% d'oxygène.
- à l'étape c), le mélange gazeux est constitué de 10% d'hélium, 3% d'oxygène et de 87% d'argon.
- à l'étape b), l'arc est un arc rotatif obtenu en mettant en oeuvre un courant d'intensité inférieure à 320A et/ou de tension inférieure à 32 V.
- les pièces ont une épaisseur comprise entre 0,5 mm et 5 mm, typiquement entre 1 et 3 mm.
- le joint à souder est de forme circulaire.
- le fil d'apport fusible est un fil plein de diamètre 1 mm.
- les pièces sont en acier non alliés, tels les aciers au carbone, ou faiblement alliés (<5% en poids d'éléments d'alliage) ou les aciers à Haute Limite Elastique (HLE).
- la vitesse de soudage est comprise entre 0,9 et 2 m/mn.
- la vitesse du fil est comprise entre 16 et 20 m/min.
- les pièces à souder sont des éléments constitutifs d'une poutrelle.

La présente invention va être maintenant mieux comprise grâce aux explications données dans l'Exemple ci-après.

### Exemple

Afin de vérifier l'efficacité du procédé de l'invention, on a opéré un soudage MAG de tôles d'acier ayant des épaisseurs comprises entre 1,5 et 2,5 mm, généralement de l'ordre de 2,5 mm, en utilisant un fil d'apport plein de type STARMAG G3 Si 1 selon EN 440 et un gaz de protection ternaire formé de 3% d'oxygène, de 10% d'hélium et d'argon pour le reste (jusqu'à 100%) ; les pourcentages (%) sont en volume. Le fort potentiel d'ionisation de l'hélium de ce mélange ternaire favorise l'effet de mouillage et influe sur la forme du cordon de soudure, alors que l'addition d'oxygène comme gaz oxydant permet de stabiliser la racine de l'arc.

Afin d'obtenir un mode de transfert de métal dans l'arc de type « arc rotatif » à basse énergie, on a réglé le générateur de courant de soudage (courant lisse), pour qu'il délivre une intensité inférieure à 320A, par exemple égale à 300 A et une tension inférieure à 35 V, par exemple égale à 33 V.

Des essais de soudage ont été opérés sur des configurations de joint de type à clin, bord soyé et en pleine tôle, en utilisant les paramètres de soudage du Tableau ci-après.

**Tableau : Paramètres de soudage**

| | | |
|---|---|---|
| Intensité de soudage | 288 à 330 A | Typiquement de l'ordre de300à315A |
| Tension de soudage | 30 à 33 V | Typ. 33 V |
| longueur de fil sorti (*stick out)* | 22 à 30 mm | Typ. 24 mm |
| Vitesse du fil | 18 à 20 m/mn | Typ. 20 m/min |
| Vitesse de soudage | 1,4 à 2 m/mn | Typ. 1,5 à 1,9 m/min |

Les résultats obtenus montrent que, dans ces conditions opératoires, on obtient une augmentation significative du taux de dépôt puisqu'il est supérieur de 25% au taux de dépôt généralement obtenu avec un procédé de soudage MAG classique (c'est-à-dire avec arc non rotatif) et un profil de cordon de soudure présentant une pénétration importante (i.e. supérieure à 1 mm) et large en racine, c'est-à-dire en forme de U.

De plus, le soudage se fait sans projection, ce qui permet d'éviter toute étape supplémentaire de parachèvement.

En fait, le fait de souder à régime d'arc rotatif permet vraisemblablement une augmentation de la densité de courant, donc une meilleure pénétration de soudage malgré les faibles énergies mises en oeuvre.

Le régime de type arc rotatif a été confirmé grâce à une visualisation du comportement de l'arc électrique pendant le soudage au moyen d'une caméra à haute vitesse (7000 images/seconde) permettant de filmer les mouvements de l'arc et le transfert du métal depuis le fil d'apport fondu par l'arc vers le bain de fusion.

Le procédé de soudage de la présente invention est applicable notamment en soudage de chanfrein, dans la fabrication de poutrelles reconstituées, en soudage en continu en substitution du soudage discontinu, par exemple pour réaliser des plateformes de véhicules (dans le but d'éviter une corrosion entre cordons) ou toute autre construction chaudronnée, tôlerie, serrurerie ... et est applicable sur des faibles épaisseurs, c'est-à-dire de moins de 5 mm.

Outre ces applications, le procédé de l'invention à arc rotatif à faible énergie peut être mis en oeuvre en robotique ou en soudage mécanisé.

## Revendications

1. Procédé de soudage MAG à l'arc électrique mettant en oeuvre un fil d'apport fusible et un gaz de protection, dans lequel :
a) on assemble au moins deux pièces métalliques l'une avec l'autre de manière à définir un joint à souder entre lesdites pièces métalliques,
b) on opère à l'aide de l'arc électrique, une fusion du métal constitutif desdites pièces le long du joint à souder et simultanément une fusion progressive du fil d'apport et le dépôt, au niveau du joint, du métal fondu issu de la fusion du fil de manière à obtenir, après refroidissement, un cordon de soudage,
c) durant l'étape b), on opère une protection gazeuse du joint de soudure au moyen d'un gaz de protection,
**caractérisé en ce qu'**à l'étape a), lesdites pièces métalliques sont à bords soyés et définissent un joint à souder de forme incurvée et, à l'étape b), l'arc est un arc rotatif obtenu en mettant en oeuvre un courant d'intensité inférieure à 400A et de tension inférieure à 40 V.

2. Procédé selon la revendication 1, **caractérisé en ce qu'**à l'étape c), le gaz de protection est un mélange gazeux ternaire constitué de 8 à 12 % d'hélium, de 2,5 à 3,5 % d'oxygène et d'argon pour le reste (% en volume).

3. Procédé selon l'une des revendications précédentes, **caractérisé en ce qu'**à l'étape c), le gaz de protection contient plus de 9% d'hélium, de préférence plus de 9,5% d'hélium, et/ou le mélange gazeux contient moins de 11% d'hélium, de préférence moins de 10,5% d'hélium.

4. Procédé selon l'une des revendications précédentes, **caractérisé en ce qu'**à l'étape c), le gaz de protection contient plus de 2,7% d'oxygène, de préférence plus de 2,8% d'oxygène et/ou moins de 3,3% d'oxygène, de préférence moins de 3,2% d'oxygène.

5. Procédé selon l'une des revendications précédentes, **caractérisé en ce qu'**à l'étape c), le mélange gazeux contient entre 2,9% et 3,1% d'oxygène.

6. Procédé selon l'une des revendications précédentes, **caractérisé en ce qu'**à l'étape c), le mélange gazeux est constitué de 10% d'hélium, 3% d'oxygène et de 87% d'argon.

7. Procédé selon l'une des revendications précédentes, **caractérisé en ce qu'**à l'étape b), l'arc est un arc rotatif obtenu en mettant en oeuvre un courant d'intensité inférieure à 360A et/ou de tension inférieure à 35 V.

8. Procédé selon l'une des revendications précédentes, **caractérisé en ce que** les pièces ont une épaisseur comprise entre 0,5 mm et 5 mm, typiquement entre 1 et 3 mm.

9. Procédé selon l'une des revendications précédentes, **caractérisé en ce que** le joint à souder est de forme circulaire.

10. Procédé selon la revendication 8, **caractérisé en ce que** le fil d'apport fusible est un fil plein et/ou **en ce que** les pièces sont en acier.

## Patentansprüche

1. MAG-Lichtbogenschweißverfahren, das einen Schmelzschweißdraht und ein Schutzgas einsetzt, bei dem:
a) mindestens zwei Metallteile miteinander verbunden werden, um eine Schweißfuge zwischen den Metallteilen zu definieren,
b) mit Hilfe des Lichtbogens ein Schmelzen des Metalls, aus dem die Teile bestehen, entlang der Schweißfuge und gleichzeitig ein progressives Schmelzen des Schweißdrahtes vorgenommen wird, und im Bereich der Fuge geschmolzenes Metall, das vom Schmelzen des Schweißdrahtes stammt, aufgebracht wird, um nach dem Abkühlen eine Schweißnaht zu bilden,
c) während des Schrittes b) ein Gasschutz der Schweißfuge mit Hilfe eines Gasschutzes verwirklicht wird,
**dadurch gekennzeichnet, dass** in Schritt a) die Metallteile durchgezogene Ränder haben und eine Schweißfuge von gekrümmter Form definieren, und in Schritt b) der Lichtbogen ein Drehlichtbogen ist, der erhalten wird, in dem ein Strom von geringerer Stärke als 400 A und von geringerer Spannung als 40 V eingesetzt wird.

2. Verfahren nach Anspruch 1, **dadurch gekennzeichnet, dass** in Schritt c) das Schutzgas ein ternäres Gasgemisch ist, bestehend aus 8 bis 12 % Helium, 2,5 bis 3,5 % Sauerstoff und Argon für den Rest (Volumenprozent).

3. Verfahren nach einem der vorhergehenden Ansprüche, **dadurch gekennzeichnet, dass** in Schritt c) das Schutzgas mehr als 9 % Helium, vorzugsweise mehr als 9,5 % Helium enthält, und das Gasgemisch weniger als 11 % Helium, vorzugsweise weniger als 10,5 % Helium enthält.

4. Verfahren nach einem der vorhergehenden Ansprüche, **dadurch gekennzeichnet, dass** in Schritt c) das Schutzgas mehr als 2,7 % Sauerstoff, vorzugsweise mehr als 2,8 % Sauerstoff und/oder weniger als 3,3 % Sauerstoff, vorzugsweise weniger als 3,2 % Sauerstoff enthält.

5. Verfahren nach einem der vorhergehenden Ansprüche, **dadurch gekennzeichnet, dass** in Schritt c) das Gasgemisch zwischen 2,9 und 3,1 % Sauerstoff enthält.

6. Verfahren nach einem der vorhergehenden Ansprüche, **dadurch gekennzeichnet, dass** in Schritt c) das Gasgemisch aus 10 % Helium, 3 % Sauerstoff und 87 % Argon besteht.

7. Verfahren nach einem der vorhergehenden Ansprüche, **dadurch gekennzeichnet, dass** in Schritt b) der Lichtbogen ein Drehlichtbogen ist, der Strom mit einer Stärke unter 360 A und/oder einer Spannung unter 35 V einsetzt.

8. Verfahren nach einem der vorhergehenden Ansprüche, **dadurch gekennzeichnet, dass** die Teile eine Dicke zwischen 0,5 mm und 5 mm, typischerweise zwischen 1 und 3 mm haben.

9. Verfahren nach einem der vorhergehenden Ansprüche, **dadurch gekennzeichnet, dass** die Schweißfuge kreisförmig ist.

10. Verfahren nach Anspruch 8, **dadurch gekennzeichnet, dass** der Schmelzschweißdraht ein voller Draht ist und/oder dass die Teile aus Stahl sind.

## Claims

1. MAG electric arc welding method using a consumable filler wire and a shielding gas, wherein:
a) at least two metal parts are joined to one another so as to define a weldable joint between said metal parts,
b) using the electric arc, the metal that constitutes the parts is melted along the joint to be welded and at the same time the filler wire and the deposit, at the joint, of the molten metal resulting from the melting of the wire are progressively melted so that, after cooling, a weld bead is obtained,
c) during step b), gas shielding of the weld joint is carried out using a shielding gas,
**characterised in that** in step a) said metal parts have joggled edges and define a weld joint of curved shape and in step b) the arc is a rotary arc obtained by the use of a current with an intensity of less than 400A and a voltage of less than 40V.

2. Method according to claim 1, **characterised in that** in step c) the shielding gas is a ternary gas mixture comprising 8 to 12 % helium, 2.5 to 3.5 % oxygen, the remainder (% by volume) being argon.

3. Method according to one of the preceding claims, **characterised in that** in step c) the shielding gas contains more than 9% helium, preferably more than 9.5% helium, and/or the gas mixture contains less than 11% helium, preferably less than 10.5% helium.

4. Method according to one of the preceding claims, **characterised in that** in step c) the protective gas contains more than 2.7% oxygen, preferably more than 2.8% oxygen and/or less than 3.3% oxygen, preferably less than 3.2% oxygen.

5. Method according to one of the preceding claims, **characterised in that** in step c) the gas mixture contains between 2.9% and 3.1 % oxygen.

6. Method according to one of the preceding claims, **characterised in that** in step c) the gas mixture is made up of 10% helium, 3% oxygen and 87% argon.

7. Method according to one of the preceding claims, **characterised in that** in step b) the arc is a rotary arc obtained using a current with an intensity of less than 360 A and/or a voltage of less than 35 V.

8. Method according to one of the preceding claims, **characterised in that** the parts have a thickness of between 0.5 mm and 5 mm, typically between 1 and 3 mm.

9. Method according to one of the preceding claims, **characterised in that** the joint to be welded is circular in shape.

10. Method according to claim 8, **characterised in that** the consumable filler wire is a solid wire and/or **in that** the parts are made of steel.
